**Europäisches Patentamt**

**European Patent Office**

**Office européen des brevets**

(19)

(11) Numéro de publication : **0 296 911 B1**

## FASCICULE DE BREVET EUROPEEN

(12)

(45) Date de publication du fascicule du brevet :
27.03.91 Bulletin 91/13

(51) Int. Cl.⁵ : **G01F 25/00**

(21) Numéro de dépôt : **88401362.4**

(22) Date de dépôt : **06.06.88**

(54) **Banc électronique pour l'étalonnage rapide de compteurs d'eau.**

(30) Priorité : 09.06.87 FR 8707979

(43) Date de publication de la demande :
28.12.88 Bulletin 88/52

(45) Mention de la délivrance du brevet :
27.03.91 Bulletin 91/13

(84) Etats contractants désignés :
BE CH DE ES GB IT LI LU NL

(56) Documents cités :
US-A- 3 940 971
ADVANCES IN INSTRUMENTATION, vol. 41,
1986, pages 1307-1314, partie 3, Research
Triangle Park, NC, US; D.W. SPITZER et al.:
"Practical cost-effective on-site flowmeter
proving"
PATENT ABSTRACTS OF JAPAN, vol. 7, no.
105 (P-195)[1250], 7 mai 1983; & JP-A-58 28 627

(73) Titulaire : **SAPPEL Société Anonyme française**
**67, rue du Rhône**
**F-68304 Saint-Louis (FR)**

(72) Inventeur : **Kreutter, François**
**10 rue Waldighoffen**
**F-68640 Steinsoultz (FR)**
Inventeur : **Rich, François**
**87 rue du général de Gaulle**
**F-68300 Village Neuf (FR)**
Inventeur : **Roy, Daniel**
**29 rue des Champs**
**F-68300 Saint louis (FR)**

(74) Mandataire : **Cuer, André**
**CABINET CUER 30, rue de Léningrad**
**F-75008 Paris (FR)**

# Description

La présente invention concerne un banc électronique pour l'étalonnage rapide de compteurs d'eau, du genre comprenant un circuit hydraulique principal raccordé à un bassin d'alimentation en eau ; une pluralité d'appareils étalons de mesure du débit de calibres différents qui sont montés en parallèle sur le circuit principal, ce dernier se subdivisant en une pluralité de rampes d'étalonnage munies de moyens pour y monter en série, de manière amovible, une pluralité de compteurs à étalonner, et retournant au bassin d'alimentation en eau ; et des moyens électroniques pour comparer les indications fournies par les débitmètres d'étalonnage et les compteurs à étalonner,

Un tel appareil est décrit dans le brevet US-A-3.940.971, selon lequel les appareils étalons de mesure du débit sont des jauges fonctionnant par remplissage d'un réservoir, ce qui rend les mesures extrêmement lentes.

Le brevet JP-A-58 28 627 décrit un dispositif similaire, mais qui comporte une seule rampe d'étalonnage, et où l'on utilise un compteur de référence. Ce dernier compte les impulsions de chacun des compteurs à étalonner, de sorte que le décompte est entaché d'une erreur de ± 1 impulsion au début, et également de ± 1 impulsion à la fin. Cette incertitude totale de ± 2 impulsions oblige à compter un grand nombre d'impulsions pour éviter qu'elle n'entache le résultat d'une erreur trop importante. Il en résulte, à l'évidence, que les mesures sont encore relativement longues.

Aussi, un but de l'invention est-il de fournir un banc d'étalonnage du genre spécifié ci-dessus qui permette de réaliser des mesures précises plus rapidement qu'avec les dispositifs connus.

Un autre but est de permettre la prise en charge par un ordinateur des cycles d'étalonnage, y compris la régulation et le contrôle automatique des débits, ainsi que des calculs d'erreur et des calculs statistiques.

Un but supplémentaire de l'invention est de proposer un tel banc d'étalonnage qui soit simple, fiable, relativement peu coûteux et totalement automatique, de telle sorte qu'il puisse être utilisé par un personnel peu qualifié.

Selon l'invention, ces buts, et d'autres qui apparaîtront par la suite, sont atteints grâce à un banc électronique d'étalonnage du genre spécifié ci-avant qui est caractérisé par le fait que les appareils étalons de mesure du débit dont il a été question plus haut sont des débitmètres d'étalonnage qui sont munis de transmetteurs de débit à impulsions haute fréquence raccordés aux moyens électroniques qui comparent les indications fournies par ces débitmètres d'étalonnage à celles provenant des compteurs à étalonner.

On comprend que, grâce à cette disposition, une erreur de comptage de ± 2 impulsion ; devient négligeable, du fait du très grand nombre d'impulsions délivrées par le débitmètre en un temps très court, ce qui augmente notablement la rapidité des opérations.

Chaque compteur à étalonner est muni d'un capteur électronique ou opto-électronique qui délivre des impulsions décomptées par les débitmètres d'étalonnage du dispositif selon l'invention.

Il en résulte que chaque compteur à étalonner déclenche son propre contrôle au début de l'une de ses impulsions, et l'arrête à la fin d'une impulsion ultérieure. Ainsi donc, et contrairement au dispositif selon le brevet japonais précité, on décompte toujours un nombre entier d'impulsions. S'il existe encore une erreur due à des fractions d'impulsions non décomptées, il s'agit des impulsions à haute fréquence des débitmètres d'étalonnage, le début, par exemple, d'une impulsion ne tombant pratiquement jamais au début ou à la fin d'une impulsion du débitmètre d'étalonnage. Toutefois, cette erreur est négligeable du fait que les impulsions de ce dernier sont à haute fréquence.

Selon une forme de réalisation, et afin d'augmenter encore la précision des mesures, le circuit hydraulique principal du banc d'étalonnage selon la présente invention comprend un dispositif de régulation du débit commandé par ses débitmètres d'étalonnage.

Le banc électronique de l'invention comprend en outre un dispositif pour le tarage des débitmètres d'étalonnage, et ce dispositif comprend une cuve de pesage électronique, des moyens pour faire s'y écouler pendant une durée prédéterminée de l'eau ayant traversé l'un des débitmètres d'étalonnage, et des moyens électroniques pour comparer la quantité d'eau ainsi reçue dans la cuve de pesage et les indications fournies par le débitmètre ainsi taré.

Cette disposition permet de tarer ou d'étalonner sur place les débitmètres étalons eux-même, ce qui facilite les opérations et augmente même la précision de l'étalonnage des compteurs, du moins indirectement, puisque l'on a tendance à réaliser plus fréquemment le tarage des débitmètres étalons.

Selon une autre forme de réalisation du banc d'étalonnage, les moyens électroniques d'étalonnage et de tarage comprennent un micro-ordinateur qui, par l'intermédiaire d'interfaces appropriées, est alimenté par les signaux provenant notamment des débitmètres d'étalonnage et de la cuve de pesage, qui agit sur la régulation des vannes associées aux débitmètres d'étalonnage et sur le fonctionnement des autres vannes du système, et qui édite les résultats de l'étalonnage des compteurs et du tarage des débitmètres d'étalonnage. Ces dispositions augmentent la rapidité, la fiabilité et la simplicité des opérations d'étalonnage de manière tellement évidente qu'il n'est pas nécessaire d'insister sur ce point,

Le circuit hydraulique principal du banc d'étalonnage selon l'invention traverse à son entrée un poste de détente et de détermination de la température.

Un circuit de mise sous vide monté entre l'entrée et la sortie du circuit hydraulique principal spécifié ci-avant comprend un venturi dont la zone d'étranglement maximal est raccordée à l'entrée des rampes d'étalonnage. Ce circuit de mise sous vide permet de débarasser l'eau traversant l'installation des bulles d'air ou de gaz qui pourraient s'y former et s'y maintenir en suspension en faussant les mesures.

La description qui va suivre, et qui ne présente aucun caractère limitatif, permettra de bien comprendre comment la présente invention peut être mise en pratique. Elle doit être lue en regard des dessins annexés, parmi lesquels :

– La figure 1 montre une vue en perspective schématique, avec un arraché, du banc d'étalonnage rapide selon l'invention ; et :

– La figure 2 est un schéma de principe représentant la partie électronique de cet appareil.

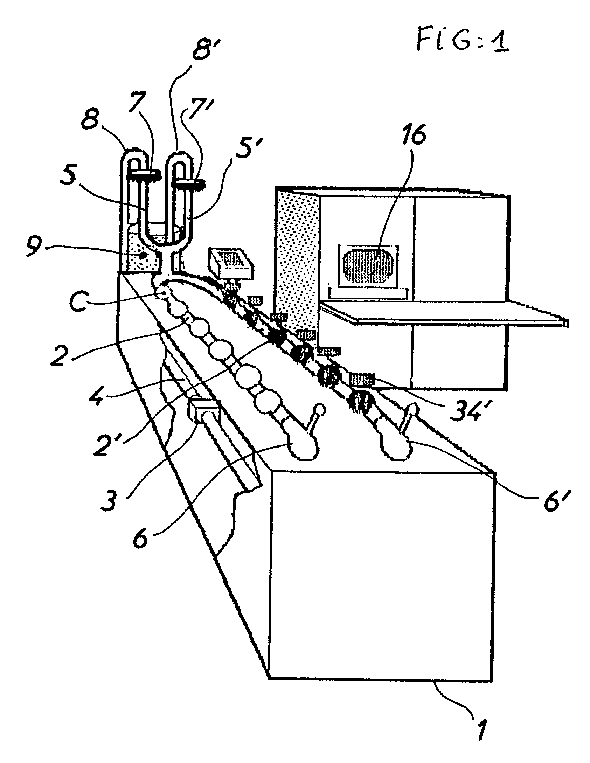

Comme on le voit sur la figure 1, ce banc d'étalonnage comprend, pour sa partie hydraulique, un bâti rigide 1 qui sert d'armature à l'ensemble du dispositif et qui reçoit

les compteurs à étalonner C sur deux rampes 2 et 2′ s'étendant à la hauteur habituelle d'un plan de travail. Sous ces rampes, un bac non représenté recueille l'eau de ruissellement lorsque l'on démonte les compteurs C des rampes 2 et 2′, et il évacue cette eau vers une tuyauterie de retour, également non représentée, du circuit hydraulique principal de l'installation.

En vue des mesures à effectuer, le bâti 1 supporte trois débitmètres électromagnétiques d'étalonnage 3 de calibres différents qui sont montés en parallèle sur l'entrée du circuit hydraulique principal 4. Ce dernier est alimenté par un bassin non représenté qui se trouve à l'intérieur du local d'étalonnage, et il se subdivise en deux circuits secondaires alimentant respectivement les rampes 2 et 2′ qui peuvent recevoir chacune, par exemple, six compteurs C à étalonner, et ce, grâce à un système de vérins hydrauliques 6 et 6′ utilisant la pression du circuit d'étalonnage.

Les circuits secondaires 5 et 5′ se rejoignent pour former le circuit d'évacuation des eaux dont il a été fait mention plus haut et qui comprend deux cols de cygne 8 et 8′ d'une hauteur d'un mètre environ au-dessus du niveau des rampes 2 et 2′. Ces cols de cygne 8 et 8′ sont munis chacun d'une vanne pneumatique, respectivement 7 et 7′, et l'eau sortant de l'un d'eux s'écoule dans une cuve 9 qui repose sur un plateau de pesage électronique, cependant que l'eau sortant de l'autre rejoint directement le bassin du local d'étalonnage.

Ainsi que cela sera précisé plus loin, la cuve de pesage 9 sert au tarage des débitmètres d'étalonnage 3, et, d'autre part, la mise en oeuvre de cette dernière, la commutation d'un débitmètre 3 à l'autre et la commutation de la rampe 2 à la rampe 2′, ou inversement, ont assurées par un jeu d'électrovannes qui sera décrit par la suite et qui est commandé par un fluide auxiliaire en assurant une parfaite étanchéité et une grande rapidité de manoeuvre en toute indépendance de la pression du circuit principal 4.

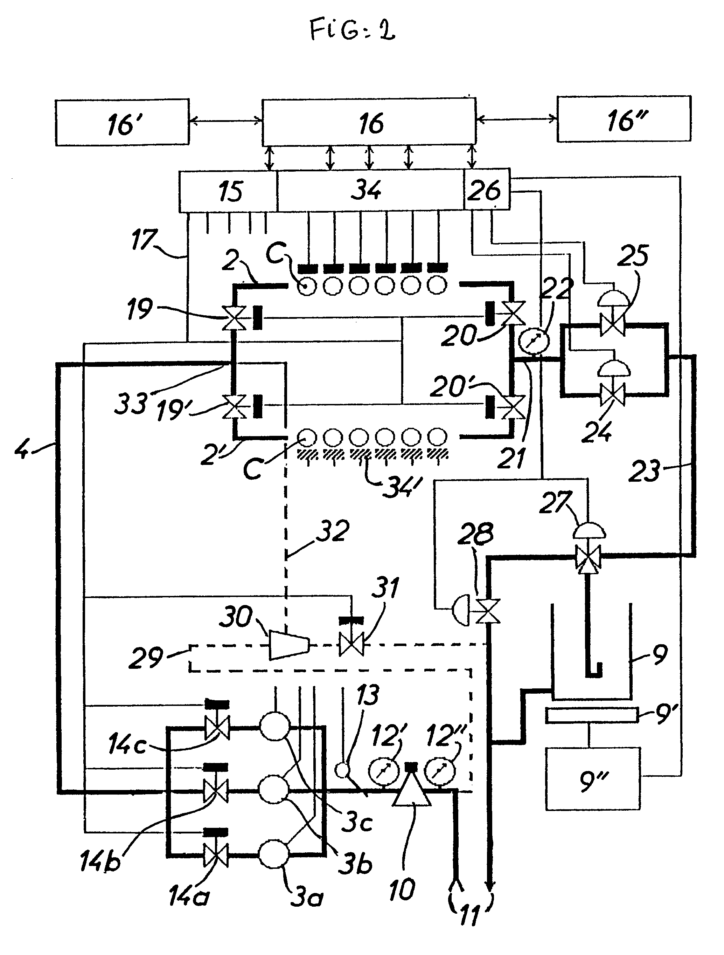

L'installation comprend également divers autres organes hydrauliques qui seront décrits plus loin en regard du schéma électronique de principe de la figure 2 à laquelle on se reportera maintenant. Cette figure illustre le mode de fonctionnement de l'ensemble qui vient d'être décrit ; le circuit hydraulique principal 4 y est représenté en traits épais, cependant que le circuit de mise sous vide et les circuits électriques le sont respectivement en traits interrompus et en traits fins.

Comme on le voit sur la figure 2, l'eau est puisée dans le bassin 11 du local d'étalonnage ; elle est préalablement traitée et maintenue à une température constante voisine de 20°C, une pompe de refoulement à pression constante alimentant le banc d'étalonnage.

Ensuite, un poste de détente 10 permet d'abaisser la pression de l'eau provenant du bassin 11, de 10 à 7 bars par exemple, pour l'ajuster en fonction des compteurs à étalonner, deux manomètres 12 et 12′ permettant de contrôler les pressions amont et aval, cependant qu'une sonde de température 13 permet de contrôler la température de l'eau.

Puis a lieu la détermination du débit d'eau traversant la rampe 2 ou 2′ qui alimente les compteurs C à étalonner. Elle se fait au moyen de trois débitmètres 3a, 3b et 3c qui sont montés en parallèle et dont les calibres sont, par exemple, et respectivement, de 0 à 6.000 l/h, de 0 à 1.000 l/h et de 0 à 50 l/h. Ces débitmètres sont montés en série avec des électrovannes 14a, 14b et 14c, respectivement, dont seule est ouverte celle qui est associée au débitmètre présentant le calibre souhaité en fonction des débits traversant les compteurs C à étalonner,

Sur chacune des rampes d'étalonnage 2 et 2′ qui sont situées immédiatement en aval des débitmètres 3, les compteurs C sont encadrés par deux vannes amont, 19 et 19′, et aval, 20 et 20′, respectivement, qui permettent de mettre l'une des rampes 2 et 2′ en action en isolant l'autre. La commande par tout ou rien de ces vannes, ainsi que celle des électrovannes 14a, 14b et 14c associées respectivement aux débitmètres 3a, 3b et 3c, a lieu à partir d'un micro- ordinateur 16 par l'intermédiaire d'une interface 15 et d'une ligne 17.

Les rampes d'étalonnage 2 et 2′ se rejoignent en un circuit unique 21, la pression à l'entrée étant mesurée par un manomètre 22. L'eau s'engage ensuite dans un circuit aval 23 après avoir traversé l'une de deux vannes de régulation 24 et 25 qui sont montées en parallèle et commandées par une interface 26 du micro-ordinateur 16 par l'intermédiaire d'un convertisseur courant/pneumatique non représenté. Plus précisément, les débitmètres 3a, 3b et 3c envoient des signaux réglés à 1.000 impulsions par litre à l'interface 15 pour délivrer un courant compris entre 0 et 20 mA à l'interface face 26 et agir sur l'une des deux vannes 24 ou 25, selon le débit considéré, pour assurer la régulation du débit.

S'il s'agit d'étalonner des compteurs, l'eau est ensuite dirigée vers le bassin 11 à travers deux vannes 27 et 28, également commandées par l'interface 26 de l'ordinateur 16. Si, au contraire, on veut procéder au contrôle et au réglage des débitmètres étalons 3 eux-mêmes, grâce à la cuve de pesage 9, et selon une procédure qui sera précisée plus loin, la vanne amont 27, qui est à trois voies, dirige l'eau vers la cuve 9 qui repose sur un plateau de pesage 9' et que l'on peut vider manuellement dans le bassin 11.

Enfin, cette installation est équipée d'un circuit de mise sous vide 29 qui est représenté en traits interrompus sur la figure 2, qui s'étend entre l'entrée et la sortie du bassin 11 et qui comprend un venturi 30 et une électrovanne 31 en série, cette dernière étant commandée à partir de l'interface 15 du micro-ordinateur 16. Le point d'étranglement maximum du venturi 30 est relié par un conduit 32 au point 33 du circuit hydraulique principal 4 où ce dernier se subdivise pour former les rampes 2 et 2', de sorte qu'avant chaque opération d'étalonnage, on peu aspirer ainsi les bulles d'air ou de gaz qui sont présentes dans l'eau destinée à traverser les compteurs C et qui fausseraient les mesures.

En ce qui concerne la cuve de pesage 9, elle sert à contrôler et à régler les débitmètres étalons 3a, 3b et 3c par pesage d'un volume d'eau traversant l'un d'eux pendant une durée prédéterminée. Réalisée en acier inoxydable, et d'une capacité de 60 litres par exemple, son remplissage se fait par l'intermédiaire d'une tuyauterie terminée à sa base par un col de cygne inversé, afin que la pression de l'eau ne s'exerce pas directement sur le plateau 9' de la balance électronique sur laquelle elle repose. Le plateau 9', pour sa part, est relié à une tête de commande 9″ qui est connectée à l'ordinateur 16 par l'intermédiaire d'une interface 26.

Quant aux résultats affichés par les compteurs C à étalonner, ils sont transmis au micro-ordinateur 16 par des cartes de comptage 34 grâce à des capteurs opto- électroniques 34' montés sur un support adaptable qui vient coiffer sans verrouillage la tête des compteurs. Ces capteurs sont caractérisés par leur capacité de détection des signaux optiques dans une large étendue du spectre visible, ce qui les rend capables de distinguer des couleurs à faible contraste. Tous les systèmes utilisés sur les compteurs d'eau peuvent ainsi être détectés. D'autre part, ces capteurs sont insensibles à la lumière du jour jusqu'à un éclairement de 15,000 lux, car la lumière émise est modulée en un signal carré de 5 kHz, le récepteur n'étant sensible qu'à cette fréquence.

Ainsi que cela a été dit plus haut, les debitmètres d'étalonnage 3a, 3b et 3c sont munis de transmetteurs de débit à impulsions haute fréquence qui sont raccordés à l'interface 15 du micro-ordinateur 16. Par l'intermédiaire des cartes de comptage 34, on effectue le décompte d'un nombre d'impulsions provenant des compteurs C, par comparaison avec les impulsions haute fréquence des débitmètres d'étalonnage 3a, 3b et 3c.

Pour sa part, et grâce à un logiciel approprié qui est à la portée des spécialistes en la matière et qui ne sera donc pas décrit ici, le micro-ordinateur 16 associé à une imprimante 16' et à un lecteur de disquettes 16″ prend en charge le cycle d'opérations à effectuer, exécute les calculs d'erreur et les calculs statistiques, et assure la régulation et le contrôle automatique des débits.

Pour faire fonctionner l'installation qui vient d'être décrite, l'opérateur met en place les compteurs C à étalonner sur l'une des rampes, 2 par exemple, chacun d'eux étant coiffé de la tête de lecture d'impulsions qui lui est destinée. L'opérateur donne alors l'ordre de démarrage de la mesure au calculateur 16 qui prend intégralement en charge les opérations à partir de cet instant. Pendant ce temps, l'opérateur dépose les compteurs éventuellement montés sur l'autre rampe 2', et il les remplace par la série de six compteurs devant subir l'étalonnage suivant.

Quand le cycle d'étalonnage de la rampe 2 est terminé, le calculateur 16 édite le procès-verbal d'étalonnage. Pour sa part, l'opérateur déclenche la mise en route de l'étalonnage de la rampe 2' ; il prélève sur le procès- verbal d'étalonnage des étiquettes auto-collantes correspondant à chacun des compteurs venant d'être testés et il les appose sur chacun d'eux. Il dépose ensuite les compteurs de la rampe 2 qui sont acheminés vers les opérations ultérieures de numérotage et de plombage. Au cas où un compteur serait hors normes, le bulletin d'étalonnage lui refuse le numéro de série et le compteur est orienté vers l'atelier de montage.

L'opération se répète de même pour chaque rampe et, dans l'exemple de réalisation qui vient d'être décrit, la capacité maximale du banc d'étalonnage selon l'invention est d'environ 400 compteurs par journée de travail de huit heures, la précision des mesures étant de 0,2% environ.

## Revendications

1. Banc électronique pour l'étalonnage rapide de compteur d'eau, comprenant un circuit hydraulique principal (4) raccordé à un bassin (11) d'alimentation en eau, une pluralité d'appareils étalons de mesure du débit (3a, 3b, 3c) de calibres différents qui sont montés en parallèle sur ledit circuit principal (4), ce dernier se subdivisant en une pluralité de rampes d'étalonnage (2, 2') munies de moyens (6, 6') pour y monter en série, de manière amovible, une pluralité de compteurs à étalonner (6), et retournant au bassin (11) d'alimentation en eau, et des moyens électroniques pour comparer les indications fournies par lesdits débitmètres d'étalonnage (3a, 3b, 3c) et lesdits compteurs (C) à étalonner, caractérisé par le fait que lesdits appareils étalons de mesure du débit sont des débitmètres d'étalonnage (3a, 3b, 3c) qui sont munis de transmetteurs de débit à impulsions haute fréquence raccordés auxdits moyens électroniques.

2. Banc électronique selon la revendication 1, caractérisé par le fait que chaque compteur à étalonner (C) est muni d'un capteur électronique ou opto-électronique (34) qui délivre des impulsions décomptées par lesdits débitmètres d'étalonnage (3a, 3b, 3c).

3. Banc électronique selon l'une quelconque des revendications 1 et 2, caractérisé par le fait que ledit circuit principal (4) comprend un dispositif (24, 25) de régulation du débit commandé par lesdits débitmètres d'étalonnage (3a, 3b, 3c).

4. Banc électronique selon l'une quelconque des revendications 1 à 3, caractérisé par le fait qu'il comprend en outre un dispositif (9) pour le tarage desdits débitmètres d'étalonnage (3a, 3b, 3c).

5. Banc électronique selon la revendication 4, caractérisé par le fait que ledit dispositif (9) pour le tarage des débitmètres d'étalonnage (3a, 3b, 3c) comprend une cuve (9) de pesage électronique, des moyens pour faire s'y écouler pendant une durée prédéterminée de l'eau ayant traversé l'un desdits débitmètres d'étalonnage (3a, 3b, 3c), et des moyens électroniques pour comparer la quantité d'eau ainsi reçue dans ladite cuve de pesage (9) et les indications fournies par le débitmètre ainsi taré.

6. Banc électronique selon l'une quelconque des revendications 1 à 5, caractérisé par le fait que lesdits moyens électroniques d'étalonnage et de tarage comprennent un micro-ordinateur (16) qui, par l'intermédiaire d'interfaces appropriées (15, 26, 34), est alimenté par les signaux provenant notamment des débitmètres d'étalonnage (3a, 3b, 3c) et de la cuve de pesage (9), qui agit sur la régulation des vannes (24, 25) associées aux débitmètres d'étalonnage (3a, 3b, 3c) et sur le fonctionnement des autres vannes du système (19, 20, 27, 28), et qui édite les résultats de l'étalonnage des compteurs (C) et du tarage des débitmètres d'étalonnage.

7. Banc électronique selon l'une quelconque des revendications 1 à 6, caractérisé par le fait que le circuit hydraulique principal (4) du banc d'étalonnage traverse à son entrée un poste de détente (10) et de détermination de la température (13),

8. Banc électronique selon l'une quelconque des revendications 1 à 7, caractérisé par le fait qu'un circuit de mise sous vide (29) monté entre l'entrée et la sortie dudit circuit hydraulique principal (4) comprend un venturi (30) dont la zone d'étranglement maximal est raccordée à l'entrée (33) desdites rampes d'étalonnage (2, 2').

9. Banc électronique selon la revendication 6, caractérisé par le fait que les signaux qui alimentent ledit micro-ordinateur (16) et qui correspondent aux volumes d'eau indiqués sur les compteurs (C) à étalonner sont fournis par des capteurs opto-électroniques (34).

## Ansprüche

1. Elektronischer Meßplatz zur schnellen Eichung von Wasserzählern mit einem hydraulischen Hauptkreis (4), der mit einem Wasservorratsbehälter (11) in Verbindung steht, mehreren Durchflußeicheinrichtungen (3a, 3b und 3c) mit jeweils verschiedenen Durchflußmengen, die mit dem Hauptkreis (4) parallel geschaltet sind, wobei letzterer in mehrere mit Eichstationen (2 und 2') eingeteilt ist, die mit Einrichtungen (6 und 6') versehen sind, um hier in serie und lösbar mehrere zu eichende Zähler (C) mit Rückfluß-verbindung zum Wasservorratsbehälter (11) anzuordnen, sowie elektronischen Einrichtungen, um die Signale der Eichdurchflußmesser (3a, 3b und 3c) und der zu eichenden Wasserzähler (C) miteinander zu vergleichen, dadurch gekennzeichnet, daß die Durchflußeicheinrichtungen als Durchflußeichmesser ausgebildet sind (3a, 3b und 3c), die mit im Impulsbetrieb arbeitenden Hochfrequenzdurchflußwandiern versehen sind, die mit den elektronischen Einrichtungen verbunden sind.

2. Elektronischer Meßplatz nach Anspruch 1, dadurch gekennzeichnet, daß jeder der zu eichenden Zähler (C) mit einem elektronischen oder optoelektronische Aufnehmer (34) versehen ist, der die Zählimpulse der Durchflußeichmesser (3a, 3b und 3c) liefert.

3. Elektronischer Meßplatz nach einem der Ansprüche 1 und 2, dadurch gekennzeichnet, daß der Hauptkreis (4) eine durch die Durchflußeichmesser gesteuerte Vorrichtung (24 und 25) zur Durchflußregelung der Durchflußeichmesser (3a, 3b and 3c) umfaßt.

4. Elektronischer Meßplatz nach einem der Ansprüche 1 bis 3, gekennzeichnet durch eine Vorrichtung (9) zum Abgleich der Durchflußeichmesser (3as, 3b und 3c).

5. Elektronischer Meßplatz nach Anspruch 4, dadurch gekennzeichnet, daß die Vorrichtung (9) zum Abgleich der Durchflußeichmesser (3a, 3b und 3c) eine Wanne (9) zum elektronischen Wiegen, Einrichtungen, die während einer bestimmten Zeit das Wasser, das durch einen der Durchflußeichmesser (3a, 3b und 3c) geflossen ist, in die Wanne fließen lassen, und elektronische Einrichtungen, umfaßt, die die diese Wassermenge, die in der Wanne (9) zum Wiegen aufgenommen worden ist, und die Signale des auf diese Weise abgeglichenen Durchflußeichmessers miteinandeer vergleicht.

6. Elektronischer Meßplatz nach einem der Ansprüche 1 bis 5, dadurch gekennzeichnet, daß die elektronischen Einrichtungen zum Eichen und zum Abgleichen einen Mikrocomputer (16) umfassen, der über geeignete Schnittstellen (15, 26 und 34) mit Signalen versorgt wird, die insbesondere durch den Durchflußeichmesser (3a, 3b und 3c) und die Wiegewanne (9) erzeugt werden, und der die den Durchflußeichmessern zugeordneten Ventile (24 und 25) steuert und der die Funktion der anderen Ventile des Systems (19, 20, 27 und 28) beeinflußt, und die die Resultate der Eichung der Zähler (C) und des Abbgleichs der Durchflußeichmesser protokolliert.

7. Elektronischer Meßplatz nach einem der Ansprüche 1 bis 6, dadurch gekennzeichnet, daß am Eingang des hydraulische Hauptkreises (4) des Meßplatzes eine Station zur Entspannung (10) und zur Messung der Temperatur (13) angeorndet ist.

8. Elektronischer Meßplatz nach einen der Ansprüche 1 bis 7, dadurch gekennzeichnet, daß eine zwischen dem Eingang und dem Ausgang des Hauptkreises (4) angeordnete Entlüftungseinrichtung ein Venturi (30) umfaßt, dessen minimaler Drosseiquerschnitt mit dem Engang (33) der Meßstationen (2 und 2') in Verbindung steht.

9. Elektronischer Meßplatz nach Anspruch 6, dadurch gekennzeichnet, daß die Engangssignale des Mikrocomputers (16), die den durch an den zu eichenden Wasserzähler abgelesenen Wassermengen entsprechen, durch optoelektronische Aufnehmer (34) geliefert werden.

## Claims

1. Electronic testing stand for fast calibration of water flow meters comprising : a hydraulic main circuit (4) connected to a water feeding tank (11) ; a plurality of standard services for flow measure (3a, 3b, 3c) of different sizes which are in parallel mounted on the said main circuit (4), this last being subdivised in a plurality of testing ramps (2, 2') provided with means (6, 6') to set up in series on it in removable way a plurality of flow meters (C) to test and then going back to the water feeding tank (11) ; and electronic means to compare the data given by the said standard flow meters (3a, 3b, 3c) with the said flow meters to test (C), characterized by the fact that the said standard devices for flow measure are standard flow meters (3a, 3b, 3c) which are provided with high frequency impulses flow transmitters connected with the said electronic means.

2. Electronic testing stand according the claim 1, wherein each flow meter to test (C) is equipped with an electronic or opto-electronic sensor (34) which gives pulses counted down by the said testing flow meters (3a, 3b, 3c).

3. Electronic testing stand according any one of the claims 1 or 2, wherein the said main circuit (4) comprises a flow regulation device (24, 25) controlled by the said testing flow meters (3a, 3b, 3c).

4. Electronic testing stand according any one of the claims 1 to 3, wherein it comprises in addition a device (9) for the calibration of the said testing flow meters (3a, 3b, 3c).

5. Electronic testing stand according the claim 4, wherein the said calibration device (9) comprises : a bowl (9) for electronic weighing ; means for running off, within a predetermined time, water which has gone through the one of said testing flow meters (3a, 3b, 3c) ; and electronic means to compare the water quantity catched in the said weighing bowl (9) with the data given by the flow meter so calibrated.

6. Electronic testing stand according any one of the claims 1 to 5, wherein the electronic means for the testing and the calibration comprise a micro-computer (16) which, through suitable interfaces (15, 26, 34), is fed by signals issued more particularly from of the testing flow meters (3a, 3b, 3c) and from the weighing bowl (9) ; the micro-computer acting on the control of the gates (25, 28) connected to the testing flow meters (3a, 3b, 3c) and on the working of the other slinces of the systems (19, 20, 27, 28) and which edits the results of the testing of the flow meters (C) and of the calibration of the testing flow meters.

7. Electronic testing stand according any one of the claim 1 to 6, wherein the main hydraulic circuit (4) of the testing stand goes through, at the beginning of its path, a station for the expansion (10) and the determination of the temperature (13).

8. Electronic testing stand according any one of the claims 1 to 7, wherein a circuit for putting under vacuum (29), disposed between the input and the output of the said hydraulic main circuit (4) comprises a venturi (30) of which the maximum throttling zone is connected to the way in (33) of the said calibration ramps (2, 2').

9. Electronic testing stand according the claim 6, wherein the signals which feed the said micro-computer (16) and which correspond to the water volumes indicated on the flow meters to test (C) are given by the opto-electronic sensors (34).

FIG. 1

FIG. 2